# EUROPEAN PATENT APPLICATION

(11) **EP 1 816 832 A1**
(43) Date of publication of application: **08.08.2007**
(21) Application number: 07001307.3
(22) Date of filing: 22.01.2007
(51) Int. Cl.: H04M 1/60, G01C 21/36, H04M 3/42

(54) **Vehicle communication device**

(30) Priority: 07.02.2006 US 765779 P
(71) Applicant: Koninklijke KPN N.V., 2516 CK The Hague (NL)
(72) Inventor: Lekovic, Bojan, 2497 CB The Hague (NL)
(74) Representative: Wuyts, Koenraad Maria

(57) **Abstract**

A communication device (1) for use in a vehicle (2), the device being arranged for providing at least the following functions:
- mobile voice communication,
- mobile message communication
- navigation,
- television, and
- Internet access,
which communication device comprises a central unit (11) for communicating with a mobile communication network, providing navigation information, receiving television images, and providing Internet access, and a display unit (12) for displaying Internet pages, television images, navigation information and mobile communication control information. Additional functions may also be provided.

## Description

### FIELD OF THE INVENTION

The present invention relates to a device for communication in a vehicle, such as a car, truck or bus. More in particular, the present invention relates to a device for providing both mobile communication and other functions in a vehicle.

### BACKGROUND

It is well known to use a mobile (US: cellular) telephone in a vehicle, such as a car. So-called car kits have been developed to facilitate the use of mobile phones in cars and to enable hands-free communication. Some car kits are coupled to the sound system of the car to allow reproduction of the sound of the telephone over the built-in car loudspeakers. Vehicles may additionally be provided with a navigation system, which provides directional information based on stored maps and GPS (Global Positioning System) information supplied by a built-in GPS receiver.

Typically, the user of the vehicle removes the (removable part of the) navigation system and the mobile phone at the end of a trip so as to prevent theft when the vehicle is not used. The user may also remove (part of) the car audio system at the end of a trip for the same reason. As a result, the vehicle user may have to carry three devices when leaving the vehicle.

Instead of, or in addition to the navigation system, the audio system and the mobile telephone mentioned above, other devices may be available in a vehicle. As people want to use their travel time more effectively and/or more enjoyably, several devices may be used in a vehicle, for example entertainment devices such as video games and television sets, and/or work-related devices such as PDAs (Personal Digital Assistants) and laptop or palmtop computers. This may lead to a plethora of individual devices. All these devices have to be removed from the vehicle after a trip, or be carefully hidden, to prevent theft. In addition, all these devices require power, although the typical vehicle only has a single power socket for auxiliary devices. Furthermore, these devices are typically incapable of communicating with each other and provide an unnecessary duplication of functions.

### SUMMARY OF THE INVENTION

It is an object of the present invention to overcome these and other problems of the Prior Art and to provide a device for use in a vehicle in which multiple functions are combined.

Accordingly, the present invention provides a communication device for use in a vehicle, the device being arranged for providing at least the following functions:
- mobile voice communication,
- mobile message communication,
- navigation,
- television, and
- Internet access,
which communication device comprises:
- a central unit for communicating with a mobile communication network, providing navigation information, receiving television images, and providing Internet access, and
- a display unit for displaying Internet pages, television images, navigation information and/or mobile communication control information.
By providing mobile communication (voice and messaging), navigation, television and Internet access in a single device, a multitude of individual devices is avoided and facilities may be shared between functions. More in particular, the central unit of the device according to the present invention combines several communication functions: mobile (telephone) communication, television communication, Internet communication and GPS (Global Positioning System) communication. In addition, the display unit of the device according to the present invention is capable of displaying several types of information simultaneously and/or consecutively: Internet pages, television images, navigation information and control information (in particular control information pertaining to mobile communication, but also control information pertaining to controlling other functions of the device).

The communication device according to the present invention may require only a single power source, as the central unit and the display unit are preferably electrically coupled. The communication device may advantageously use the power socket provided in most cars, or may be connected directly to the vehicle battery.

In a first embodiment, the central unit and the display unit are combined into a single, combined vehicle communication unit. A single, combined unit in which both the central unit and the display unit are integrated is typically easier to install and, if desired, to remove. In addition, a separate cable connecting the two units can be dispensed with, as this connection can be made internally in the combined unit. In a second embodiment, however, the central unit and the display unit are physically separate units which may be connected by a cable or by a wireless link. In this second embodiment, the central unit may be mounted out of view, for example under the dashboard or in the boot (US: trunk) of a passenger car, while the display unit is mounted in a prominent place, for example, on top of the dashboard.

The central unit and the display unit, or the combined vehicle communication unit, may be arranged for being removably mounted in the vehicle. Alternatively, the central unit and the display unit, or the combined vehicle communication unit, are integrated in the vehicle. It is preferred, however, that the central unit is permanently mounted in the vehicle, while the display unit is removably mounted. Alternatively, only part of the display unit could be removably mounted, for example a front part containing the control buttons.

All functions of the communication device according to the present invention may be provided by the central unit and the display unit, or by the combined unit. However, some functions may be provided by additional units, such as user units operable by individual passengers of the vehicle. These user units may be connected to the central unit by means of wires, but it is preferred to use wireless connections. In an advantageous embodiment, therefore, the device of the present invention is further arranged for wireless communication with user units capable of providing voice communication. The provision of user units capable of voice communication which are coupled to the central unit allows the vehicle passengers to communicate with each other, even when the interior of the vehicle is noisy. In combination with the mobile communication function, this function also allows vehicle passengers to communicate with other people outside the vehicle.

Although the wireless connection between the central unit and the user units may be accomplished in various ways, it is preferred that the wireless communication involves Bluetooth^{™} or WiFi communication.

Various other functions may be provided. For example, the communication device of the present invention may further be arranged for video gaming, instant messaging and/or storing an address book. The function of video gaming may involve games stored in the communication device, and/or Internet games. The address book preferably is an address book of the driver, containing addresses often visited and/or telephone numbers often used. Instead of a single address book, multiple address books may be used, for example an address book for the driver and each passenger. The address book may contain presence information of each of the contacts listed. Additionally, or alternatively, the address book may be capable of synchronizing with a central server database containing the details of the contacts.

The device of the present invention may further be arranged for providing sound reproduction, preferably multiple channel (for example stereo or 5.1) sound reproduction. The sound reproduction may involve playing CDs or DVDs, playing MP3 tracks, reproducing television or radio sound, etc. additional functions to communication device of the present invention can also be envisaged.

The present invention also provides a system for wireless communication with vehicles, the system comprising a wireless communication network and a communication device as defined above. The present invention additionally provides a vehicle comprising a communication device as defined above.

### BRIEF DESCRIPTION OF THE DRAWINGS

The present invention will further be explained below with reference to exemplary embodiments illustrated in the accompanying drawings, in which:
Fig. 1 schematically shows a vehicle containing a communication system according to the present invention.
Fig. 2 schematically shows the exterior of a preferred embodiment of the communication device according to the present invention.
Fig. 3 schematically shows the functions of a preferred embodiment of the communication device according to the present invention.

### DETAILED DESCRIPTION

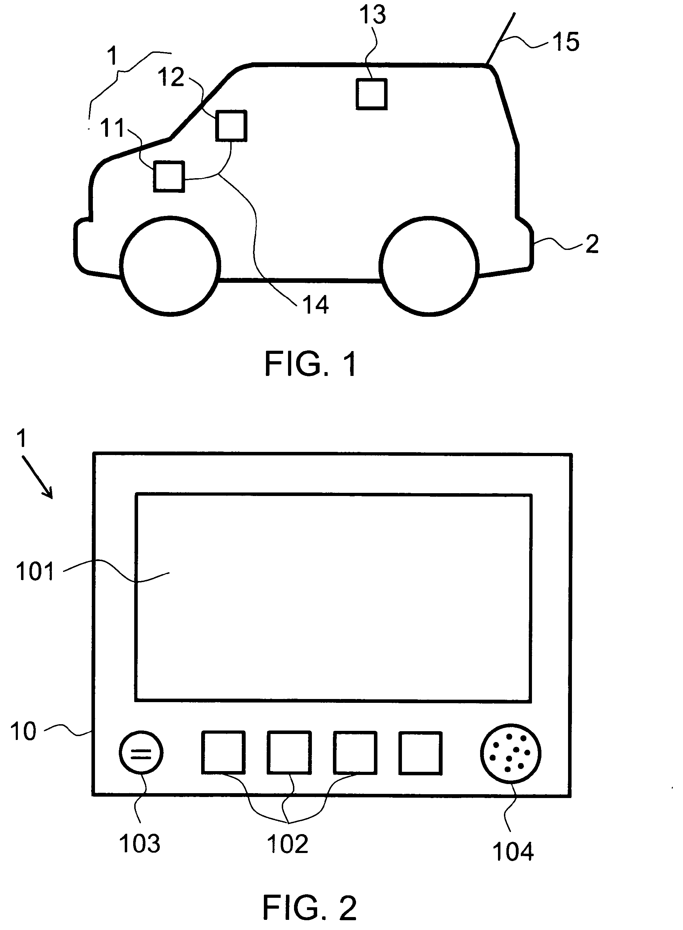

The exemplary vehicle 2 schematically shown in Fig. 1 is provided with a communication device 1 according to the present invention. The communication device 1 comprises, in the embodiment shown, a central unit 11 and a display unit 12. The central unit 11 is preferably mounted out of view, for example underneath a seat or the dashboard, or in the motor compartment or the boot of the vehicle. The display unit 12 is mounted within view of the driver, preferably on the dashboard or the windscreen. The central unit 11 and the display unit 12 are, in the embodiment shown, connected by a cable 14 which may serve for both power supply and information exchange. If the cable 14 is used for providing power, only one of the units (typically the central unit 11) needs to be connected to a power source, for instance the battery of the vehicle, or an internal battery. Alternatively, the units 11 and 12 may each have their own power source. An antenna 15 mounted on the vehicle is coupled to the central unit 11, either via a wireless connection or via a further cable (not shown).

User units 13 may also be provided in the vehicle 2. The user units 13 are capable of communicating with the central unit 11, preferably wirelessly, although embodiments can be envisaged in which wired communication is used. Each user unit 13 is capable of providing one or more services to its user, for example speech communication with other passengers via other user units, communication with remote parties via mobile (US: cellular) telephone network, text messaging, showing television programmes, video gaming, providing Internet access including email and/or instant messaging, and/or rendering sound recordings (for example MP3 sound recordings). The user units 13 may comprise a headset including at least one earphone and a microphone, and may be designed for voice control (that is, controlling the device by spoken commands). In addition, the user units may comprise a display screen for displaying video and/or control information.

The communication device 1 of the present invention shown merely by way of non-limiting example in Fig. 2 comprises an integrated unit 10, which combines the functions of the display unit 11 and the central unit 12 of Fig. 1. In the embodiment shown, the integrated unit 1 comprises a display screen 101, control buttons 102, a microphone 103 and a loudspeaker 104. The display screen 101 serves to display, for example, map and directional information, device control information, entertainment information including radio and television channels, MP3 tracks, television and still images, Internet pages and/or the text of messages (email and/or Internet messaging). The control buttons 102 serve to control the device, including functions such as on/off/standby, function selection (entertainment, navigation, Internet, entertainment source selection, volume control and/or menu selection). It is preferred that the display screen 101 displays menus showing the available functions. The display screen 101 may be a touch screen, allowing a direct selection of menu options without requiring the use of the control buttons 102. However, it is preferred to use voice commands to control the device 1. To this end, the microphone 103 is provided. Alternatively, or additionally, the driver could use a user unit (13 in Fig. 1) provided with a microphone. Accordingly, the device 1 may be arranged for remote voice control via one or more user units. The microphone 103, and/or its counterpart in a user unit, may also serve to receive speech for the purpose of telephone conversations.

The loudspeaker 104 serves to reproduce sound, including directional information, music, spoken messages (for example text messages converted into speech), and/or telephone sound.

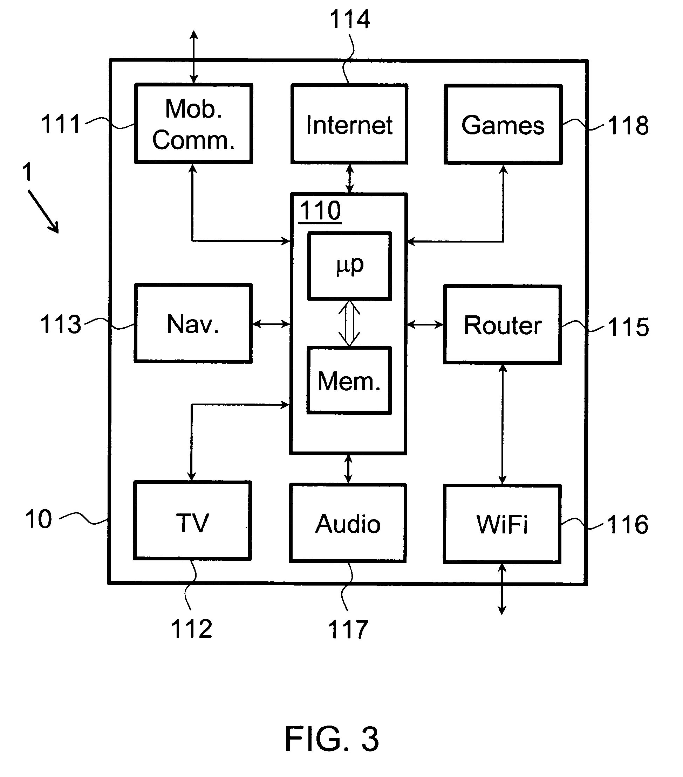

As mentioned above, the device 1 of the present invention has multiple functions for which several components are provided. As illustrated in Fig. 3, the combined unit 10 comprises a processing unit 110 which receives and processes data received from other parts of the device, and controls the other parts. The processing unit 110 comprises a memory (Mem.) for storing data and a microprocessor (µP). The data may comprise user information, such as an address book. The address book may contain presence information of each of the contacts listed. Additionally, or alternatively, the address book may be capable of synchronizing with a central server database containing the details of the contacts.

The combined unit 10 of Fig 3 further comprises a mobile communication unit 111 which is arranged for communicating with a network for mobile (US: cellular) communication, for example using GSM (Group Spéciale Mobile), UMTS (Universal Mobile Telecommunications System) and/or HSDPA (High Speed Downlink Packet Access) technology. Satellite communication may alternatively, or additionally, be provided. The mobile communication unit 111 is preferably coupled to an antenna (15 in Fig. 1) mounted on or in the vehicle. In addition, a television (TV) receiver unit 112 may be provided. A separate antenna (not shown) may be provided for television and radio reception.

The combined unit 10 of the device 1 further comprises a navigation unit 113 for providing directions. The navigation unit 113, which may be known *per se*, preferably comprises a GPS (Global Positioning System) receiver and a database containing route information.

An Internet modem 114 is also provided. In addition, the combined unit 10 illustrated in Fig. 3 comprises a router 115 and a Bluetooth^{™} or WiFi unit 116 for communicating with the user units (13 in Fig. 1). Further components may include an MP3 player, a CD and/or DVD player, a radio tuner and an amplifier, together constituting the audio unit 117. A gaming unit 118 is preferably provided, while a PDA (Personal Digital Assistant) may also be integrated in the device 1.

It can thus be seen that the device of the present invention provides so-called "bundled services" to the driver and passengers of a vehicle.

The present invention is based upon the insight that combining various functions into a single device greatly reduces the number of separate devices in a vehicle and the effort involved in installing and removing these devices, while increasing their portability and their mutual efficiency. In addition, the power supply is greatly simplified, while the user-friendliness may be greatly improved. Moreover, the cost of providing these various functions in a vehicle may be significantly reduced.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents. The term "vehicle" is meant to include cars, trucks, vans, motorcycles, bicycles, buses, trains, ships, hovercrafts and may even include airplanes.

It will be understood by those skilled in the art that the present invention is not limited to the embodiments illustrated above and that many modifications and additions may be made without departing from the scope of the invention as defined in the appending claims.

## Claims

1. A communication device (1) for use in a vehicle (2), the device being arranged for providing at least the following functions:
• mobile voice communication,
• mobile message communication,
• navigation,
• television, and
• Internet access,
which communication device comprises:
• a central unit (11) for communicating with a mobile communication network, providing navigation information, receiving television images, and providing Internet access, and
• a display unit (12) for displaying Internet pages, television images, navigation information and/or mobile communication control information.

2. The device according to claim 1, wherein the central unit (11) and the display unit (12) are combined into a single, combined vehicle communication unit (10).

3. The device according to claim 1 or 2, wherein the central unit (11) and the display unit (12), or the combined vehicle communication unit (10), are arranged for being removably mounted in the vehicle (2).

4. The device according to claim 1 or 2, wherein the central unit (11) and the display unit (12), or the combined vehicle communication unit (10), are integrated in the vehicle (2).

5. The device according to any of the preceding claims, further being arranged for wireless communication with user units (13) capable of providing voice communication.

6. The device according to claim 5, wherein the wireless communication involves Bluetooth or WiFi communication.

7. The device according to any of the preceding claims, further being arranged for video gaming.

8. The device according to any of the preceding claims, further being arranged for instant messaging.

9. The device according to any of the preceding claims, further being arranged for storing an address book.

10. The device according to claim 9, capable of synchronizing the address book with a central database.

11. The device according to any of the preceding claims, further being arranged for providing sound reproduction, preferably multiple channel sound reproduction.

12. A system for wireless communication with vehicles (2), the system comprising a wireless communication network and a device (1) according to any of the preceding claims.

13. A vehicle (2) provided with a device (1) according to any of claims 1 to 11.
